# NEUE EUROPÄISCHE PATENTSCHRIFT

(11) **EP 1 466 695 B2**
(45) Veröffentlichungstag und Bekanntmachung des Hinweises auf die Entscheidung über den Einspruch: **18.05.2011**
(45) Hinweis auf die Patenterteilung: 17.10.2007
(21) Anmeldenummer: 04090125.8
(22) Anmeldetag: 01.04.2004
(51) Int. Cl.: B23K 26/34, F01D 5/00

(54) **Verfahren zum Wiederaufbauen flächig ausgebildeter beschädigter Bauteile**
Method or rebuilding damaged planar articles
Procédé de reconstruction d'une pièce plane endommagée

(30) Priorität: 12.04.2003 DE 10316966
(43) Veröffentlichungstag der Anmeldung: 13.10.2004
(73) Patentinhaber: Rolls-Royce Deutschland Ltd & Co KG, 15827 Dahlewitz (DE)
(72) Erfinder: Mielke, Rainer, 61440 Oberursel (DE)
(74) Vertreter: Wablat, Wolfgang

(56) Entgegenhaltungen:
- EP-A- 0 403 736
- EP-B1- 0 562 130
- DE-T2- 60 107 046
- US-A- 4 841 117
- US-A- 5 701 669

## Beschreibung

Die Erfindung bezieht sich auf ein Verfahren zum Wiederaufbauen von flächig ausgebildeten, verschlissenen oder auf andere Art beschädigten, aus massivem Material bestehenden, dreidimensional geformten Verdichterschaufeln von Flugzeugtriebwerken durch Auftragsschweißen. (Siehe z. B. US-A-4 841 117)

Die Verdichterschaufeln von Flugzeugtriebwerken unterliegen im Bereich der Oberkante und - bei einem hohen Anteil in der Luft befindlicher Sandkörnchen - auch in dem Bereich von der Oberkante zur Hinterkante hin einem erheblichen Strömungsverschleiß. Insbesondere die Vorderkante der Verdichterschaufeln kann darüber hinaus durch größere Objekte (z. B. schon durch kleine Steinchen) beschädigt werden. Sofern die Schaufeln separat hergestellt und lösbar an der Verdichterscheibe befestigt sind, können die beschädigten oder verschlissenen Schaufeln durch neue ausgetauscht werden. Dieses ohnehin kostenaufwendige Verfahren ist bei Verdichterscheiben, die nach der Blisktechnologie hergestellt sind, nicht möglich, da die Schaufeln in diesem Fall einstückig an die Verdichterscheibe angeformt sind.

Die Möglichkeiten zur Reparatur der Verdichterschaufeln sind jedoch begrenzt. Eine der wenigen Perspektiven in dieser Hinsicht eröffnet das Laser-Pulver-Auftrags-schweißen, und zwar insbesondere unter dem Blickwinkel, dass eine das Schweißbad stützende Kokille konturnah den wieder aufzubauenden oberen Kantenbereich umfasst und dadurch der Nachbearbeitungsaufwand gegenüber einem freien Auftragen gering gehalten werden kann. Das Laser-Pulver-Auftragsschweißen in Kokille ist jedoch insofern nachteilig, als das Wiederaufbauen der Schaufel nur in einem begrenzten oberen Randbereich von wenigen Millimetern möglich ist, da das Einbringen des Laserstrahls und des Pulvers in die Kokille aufgrund von Hinterschneidungen nur bis zu einer bestimmten Tiefe möglich ist und außerdem eine längere Kokille wegen der komplizierten dreidimensionalen Schaufelform nach dem Auftragsschweißen nicht mehr von der reparierten Schaufel abgenommen werden kann.

Der Erfindung liegt die Aufgabe zugrunde, ein Verfahren und eine Vorrichtung zur Reparatur von aus massivem Material bestehenden, verschlissenen oder beschädigten Verdichterschaufeln, insbesondere von in BLISK-Bauweise ausgeführten Verdichterschaufeln, durch Auftragsschweißen so auszubilden, dass mit geringem Nacharbeitsaufwand ein Wiederaufbauen dreidimensional geformter Schaufeln an jeder Kante und in jeder erforderlichen Länge möglich ist.

Erfindungsgemäß wird die Aufgabe mit einem Verfahren gemäß den Merkmalen des Patentanspruchs 1 sowie einer gemäß den Merkmalen des Patentanspruchs 10 ausgebildeten Anordnung zur Durchführung des Verfahrens gelöst. Aus den Unteransprüchen ergeben sich weitere Merkmale und vorteilhafte Weiterbildungen der Erfindung.

Der wesentliche Erfindungsgedanke besteht darin, dass das Wiederaufbauen des beschädigten Bauteilabschnitts durch Auftragsschweißen unmittelbar auf eine im Wesentlichen waagerecht angeordnete Unterlage durchgeführt wird, deren Oberflächenform die exakte Negativform der Unterseite des betreffenden Bauteils oder Bauteilabschnitts ist. Die Oberfläche der Unterlage liegt formschlüssig an der Unterseite des zu erneuernden bzw. des verbliebenen Bauteilabschnitts an.

Da die vorübergehend an der Unterseite des verbliebenen Verdichterschaufelteils befestigte Unterlage nach dem Reparaturschweißen nach unten entfernt werden kann, ist es möglich, selbst dreidimensional geformte Verdichterschaufeln an jeder Stelle zu reparieren oder vollständig neu aufzubauen. Das Schweißen erfolgt in hoher Qualität in der schweißtechnisch vorteilhaften Wannenlage und kann selbst in eingebautem Zustand an BLISK-Verdichterscheiben durchgeführt werden, und zwar entsprechend der jeweiligen Schaufelstärke auch in im Querschnitt übereinander liegenden Schweißlagen.

Das Auftragsschweißen wird parallel oder senkrecht zu einer Schnittebene, an der das beschädigte Teil vom Schaufelteil abgetrennt wurde, gleich- oder gegenläufig durchgeführt.

Gemäß einem weiteren Merkmal der Erfindung werden der wiederaufzubauende Schaufelteilabschnitt mit bildgebenden Verfahren ermittelt und die Bewegungen des Laserstrahles und der Pulverzuführungsdüse berechnet und der Schweißvorgang auf dieser Grundlage exakt gesteuert.

Die erfindungsgemäße Anordnung umfasst eine Schweißwanne, und zwar mit einem eine Unterlage bildenden Schweißwannenboden, dessen Innenfläche die Negativform der betreffenden Schaufelseite aufweist, und mit Seitenwangen, deren Innenkontur der Kontur der Vorder- bzw. Hinterkante der zu reparierenden Schaufel entspricht.

Es sind zwar aus JP-A-61165275, EP-B-0 924 020 und EP-B-0 562 130 Verfahren zum Wiederaufbauen von Verdichterschaufeln von Flugzeugtriebwerken durch Auftragsschweißen bekannt. Bei diesen bekannten Verfahren stehen aber die Schaufeln senkrecht, und es erfolgt kein Auftragsschweißen gegen einen im Wesentlichen waagerechten Schweißwannenboden.

Ein Ausführungsbeispiel der Erfindung wird anhand der Zeichnung näher erläutert. Es zeigen:
- Fig. 1: eine Teilansicht eines zweistufigen, nach der BLISK-Technologie gefertigten Verdichterrades, bei dem die Schaufelreparatur erfindungsgemäß in waagerechter Wannenlage durch Laser-Pulver- Auftragsschweißen erfolgt;
- Fig. 2: eine Detailansicht nach Fig. 1, mit einer in ei- ner Schweißwanne angeordneten, zum Wiederaufbauen vorgesehenen Verdichterschaufel;
- Fig. 3: eine Seitenansicht einer Verdichterschaufel, in der die punktierten Linien den aufgrund von Ver- schleiß oder Beschädigung bis zu der jeweiligen Linie abgetrennten Bereich markieren, von wo aus der Wiederaufbau der Verdichterschaufel durch Auftragsschweißen erfolgt;
- Fig. 4: eine Seitenansicht einer Verdichterschaufel, de- ren Reparatur durch konturparalleles gegenläufi- ges Auftragsschweißen entlang der abgetrennten Seite der Verdichterschaufel durchgeführt wird;
- Fig. 5: eine Seitenansicht einer Verdichterschaufel, bei der das Auftragsschweißen gegenläufig und im We- sentlichen senkrecht zur abgetrennten Seite der Verdichterschaufel erfolgt; und
- Fig. 6: eine Seitenansicht einer Verdichterschaufel, bei der das Auftragsschweißen gleichläufig an der ab- getrennten Seite der Verdichterschaufel durchge- führt wird.

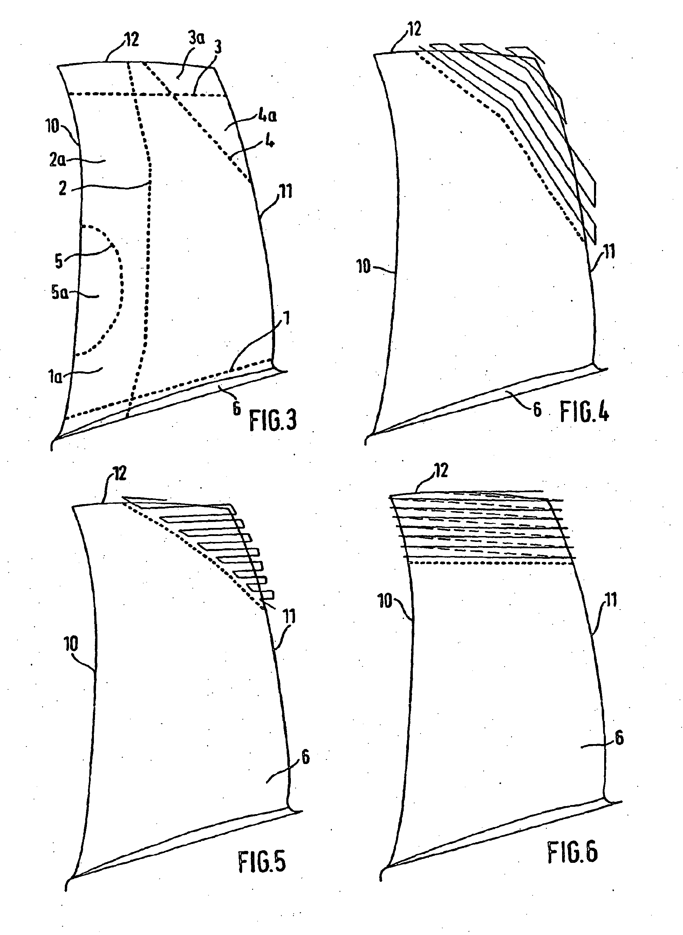

Gemäß Fig. 3 sind im Wesentlichen folgende Fälle der Schaufelbeschädigung und des Wiederaufbaus der Schaufel denkbar:
1. Die Schaufel ist über die gesamte Länge unbrauchbar und wurde daher am Schaufelfuß entlang der Linie 1 abgetrennt, um sie ausgehend von dieser Schnittebene neu aufzubauen.
2. Die Schaufel ist an der Vorderkante verformt. Der beschädigte Teil wurde längs der Linie 2 abgetrennt, und die Schaufel wird ausgehend von dieser Schnittebene wieder aufgebaut.
3. Die Oberkante der Schaufel ist in üblicher Weise aufgrund der Strömung verschlissen und wird ausgehend von der Linie 3 durch Auftragsschweißen repariert.
4. Die Schaufel ist durch einen überdurchschnittlich großen Anteil von Partikeln in der Luft in einem Eckbereich an der Ober- und der Hinterkante verschlissen und wird ausgehend von der Linie 4 repariert.
5. Die Schaufel ist durch einen Fremdkörper in einem begrenzten Bereich an der Vorderkante beschädigt. Der beschädigte Bereich wird entlang der Linie 5 ausgeschnitten und die Schaufel wird entlang dieser Schnittebene wieder aufgebaut.

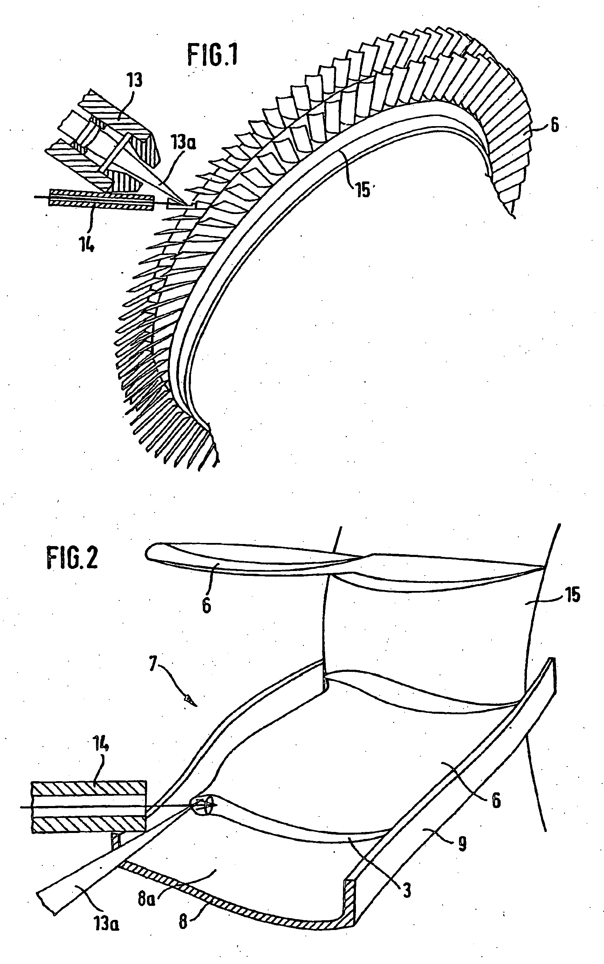

Nachdem das beschädigte Schaufelteil 1a, 2a, 3a, 4a oder 5a - jeweils ausgehend von der punktierten Linie 1, 2, 3, 4 oder 5 - von der Verdichterschaufel 6 entfernt ist, wird an der Unterseite der einstückig mit einer BLISK-Scheibe 15 verbundenen, im Wesentlichen waagerecht ausgerichteten Verdichterschaufel 6 eine Schweißwanne 7 in geeigneter Weise lösbar befestigt. Die der Saug- bzw. Druckseite der Verdichterschaufel 6 zugewandte Kontaktfläche 8a des Schweißwannenbodens 8 der Schweißwanne 7 hat exakt die Negativform der betreffenden Schaufelseite, während die Form der Seitenwangen 9 der Kontur der Vorder- bzw. Hinterkante 10, 11 der Verdichterschaufel 6 entspricht. Bei dem in Fig. 2 gezeigten Ausführungsbeispiel wurde die Oberkante 12 der Verdichterschaufel 6 nach normalem Strömungsverschleiß längs der Linie 3 (Schnittebene) abgetrennt. Nach dem Abtrennen des Schaufelteils 3a wird die Schweißwanne 7, deren Länge mindestens der Schaufellänge entspricht, vorübergehend an der Verdichterschaufel 6 befestigt und eine Laser-Pulver-Schweißvorrichtung 13 zur Erzeugung eines Laserstrahls 13a mit separater Pulverzuführdüse 14 und in diese integrierter Schutzgaszufuhr in Position gebracht. Anschließend wird bei waagerechter Schaufellage parallel zur Linie 3 - beispielsweise gleichläufig nach Fig. 6 - Schweißnaht für Schweißnaht aufgetragen. Entsprechend der jeweiligen Schaufelstärke können auf dem Schweißwannenboden 8 auch zwei oder mehrere Schweißnähte übereinander gelegt werden. Die Verfahrwege der Laseroptik und der Pulverzuführungsdüse werden auf der Grundlage des mit bildgebenden Verfahren ermittelten fehlenden Schaufelteils im Vergleich mit einer Masterschaufel zuvor computertechnisch errechnet, so dass der Schweißvorgang automatisch ablaufen kann und eine hohe Qualität der Auftragsschweißüng gewährleistet ist. Das Einbringen des Pulvers kann seitlich oder - bei ausreichendem Platz zwischen den Schaufeln auch zirkular erfolgen. Nach Beendigung des Schweißvorgangs wird die Schweißwanne 7 gelöst und nach unten von der Verdichterschaufel 6 abgenommen. Anschließend wird die Verdichterschaufel 6 zur Erzeugung der erforderlichen Oberflächenausbildung mit elektrochemischen oder spangebenden Verfahren geglättet.

### Bezugszeichenliste

- 1 bis 5: Schnittebene (Trennlinie), an der der beschä- digte Schaufelteil abgetrennt und wieder auf- gebaut wird;
- 1a bis 5a: abgetrennter (erneuerter) Schaufelteil
- 6: Verdichterschaufel
- 7: Schweißwanne
- 8: Schweißwannenboden (Unterlage)
- 8a: Kontaktfläche
- 9: Seitenwangen von 7
- 10: Vorderkante von 6
- 11: Hinterkante von 6
- 12: Oberkante von 6
- 13: Laser-Pulver-Schweißvorrichtung
- 13a: Laserstrahl
- 14: Pulverzufuhrdüse mit integr. Schutzgaszufuhr
- 15: BLISK-Scheibe

## Patentansprüche

1. Verfahren zum Wiederaufbauen von flächig ausgebildeten, verschlissenen oder auf andere Art beschädigten, aus massivem Material bestehenden, dreidimensional geformten Verdichterschaufeln (6) von Flugzeug-triebwerken durch Auftragsschweißen, bei dem entlang einer Schnittebene (1 bis 5), an der der beschädigte oder verschlissene Schaufelteilabschnitt (1a bis 5a) abgetrennt wurde, entsprechend der wieder aufzubauenden Form und Länge in aufeinanderfolgenden Lagen ein Werkstoff ausgeschmolzen wird, **dadurch gekennzeichnet,**
a) **dass** die verdichterschaufel (6) im wesentlichen waagerecht ausgerichtet wird,
b) **dass** das Auftragsschweißen gegen einen im Wesentlichen waagerechten, an der verbleibenden Schaufelteilfläche formschlüssig anliegenden Schweißwannenboden (8) erfolgt,
c) und **dass** die Oberflächenform des schweißwannenbodens (8) mindestens in dem zu erneuernden Schaufelteilabschnitt (1a bis 5a) mit der dem Schweißwannenboden (8) zugewandten Schaufelseite negativ formgleich ist.

2. Verfahren nach Anspruch 1, **dadurch gekennzeichnet, dass** entsprechend der Stärke des flächigen Schaufelteils zwei oder mehrere Schweißlagen übereinander aufgetragen werden.

3. Verfahren nach Anspruch 1 oder 2, **dadurch gekennzeichnet, dass** das Auftragsschweißen gleich- oder gegenläufig parallel zur Schnittebene (1 bis 5) erfolgt.

4. Verfahren nach Anspruch 1 oder 2, **dadurch gekennzeichnet, dass** das Auftragsschweißen gleich- oder gegenläufig senkrecht zur Schnittebene (1 bis 5) erfolgt.

5. Verfahren nach einem der Ansprüche 1 bis 4,
**dadurch gekennzeichnet, dass** das Auftragsschweißen unter Schutzgas nach der Laser-Pulver-Auftragsschweißtechnologie durchgeführt wird.

6. Verfahren nach Anspruch 5, **dadurch gekennzeichnet, dass** die Zuführung des Schweißgutes seitlich oder zirkular erfolgt.

7. Verfahren nach einem der Ansprüche 1 bis 6,
**dadurch gekennzeichnet, dass** Größe und Form des zu erneuernden Schaufelteilabschnittess und die Übergangsgeometrie mit bildgebenden Verfahren ermittelt werden und die Verfahrwege für das Auftragen der Schweißlagen computertechnisch errechnet und gesteuert werden.

8. Verfahren nach einem der Ansprüche 1 bis 7,
**dadurch gekennzeichnet, dass** der Schweißvorgang an einer ein- oder mehrstufigen BLISK-Verdichterscheibe in eingebautem Zustand durchgeführt wird.

9. Verfahren nach einem der Ansprüche 1 bis 8,
**dadurch gekennzeichnet, dass** der wiederaufgebaute Schaufelteilabschnitt einer Oberflächenbearbeitung und einer Wärmebehandlung unterzogen wird.

10. Anordnung zur Durchführung des Verfahrens nach Anspruch 1, bestehend aus einem zu reparierenden Schaufelteil und einer Schweißwanne,
**dadurch gekennzeichnet, dass** die an dem zu reparierenden Schaufelteil an einer Unterseite vorübergehend fixierte und nach dem Reparaturschweißen nach unten abnehmbare Schweißwanne (7) aus einem Schweißwannenboden (8) und Seitenwangen (9) besteht, wobei die Oberflächenform des Schweißwannenbodens (8) mit der Oberflächenform einer Seite des zu reparierenden Schaufelteils eine identische Abformung darstellt und die Innenkontur der Seitenwangen (9) mit der Kontur der Vorderkante (10) und der Hinterkante (11) des zu reparierenden flächigen Schaufelteils übereinstimmt.

11. Anordnung nach Anspruch 9, **dadurch gekennzeichnet, dass** die Schweißwanne (7) aus einem warmfesten, wärmeableitenden Material besteht.

12. Anordnung nach Anspruch 11, **dadurch gekennzeichnet, dass** die Wärmeleitfähigkeit so gewählt ist, dass ein örtlich begrenztes Schmelzbad und dessen langsame Abkühlung gewährleistet sind.

## Claims

1. Method for the restoration of worn or otherwise damaged areal compressor blades (6) of aircraft engines by build-up welding, in which a material is melted, in the form and length to be restored and in subsequent layers along a sectional plane (1 to 5) at which the damaged or worn blade part section (1a to 5a) was separated, with the compressor blades (6) being three-dimensionally shaped and made of solid material, **characterized in**
a) **that** the compressor blade (6) is essentially horizontally aligned,
b) **that** build-up welding is performed against an essentially horizontal welding cavity bottom (8) which form-fits the remaining blade part surface,
c) and **that** the surface shape of the welding cavity bottom (8) is the exact negative of the blade side facing the welding cavity bottom (8) at least in the blade part section (1 a to 5a) to be restored.

2. Method in accordance with Claim 1, **characterized in that** two or more weld layers are applied on top of one another, in correspondence with the thickness of the areal blade part.

3. Method in accordance with Claim 1 or 2, **characterized in that** build-up welding is performed co-directionally or contra-directionally parallel to the sectional plane (1 to 5).

4. Method in accordance with Claim 1 or 2, **characterized in that** build-up welding is performed co-directionally or contra-directionally vertical to the sectional plane (1 to 5).

5. Method in accordance with one of the Claims 1 to 4, **characterized in that** protective-gas build-up welding is performed by laser powder welding technology.

6. Method in accordance with Claim 5, **characterized in that** weld material is supplied from the side or circularly.

7. Method in accordance with one of the Claims 1 to 6, **characterized in that** the size and shape of the blade part section to be restored as well as the transition geometry are determined by imaging methods, and the travels for the deposition of the weld layers are calculated and controlled by computer.

8. Method in accordance with one of the Claims 1 to 7, **characterized in that** the welding process is performed on a one-stage or multi-stage compressor BLISK in the installed state.

9. Method in accordance with one of the Claims 1 to 8, **characterized in that** the restored blade part section is subject to surface processing and heat treatment.

10. Arrangement for the performance of the method in accordance with Claim 1, consisting of a blade part to be repaired and a welding cavity, **characterized in that** the welding cavity (7), which is temporarily attached to a bottom side of the blade part to be repaired and removable downwards after repair welding, includes of a welding cavity bottom (8) and side walls (9), with the surface shape of the welding cavity bottom (8) being an identical reproduction of the surface shape of a side of the blade part to be repaired, and with the inner contour of the side walls (9) agreeing with the contour of the leading edge (10) and the trailing edge (11) of the areal blade part to be repaired.

11. Arrangement in accordance with Claim 9, **characterized in that** the welding cavity (7) consists of a heat-resistant, heat-dissipating material.

12. Arrangement in accordance with Claim 11, **characterized in that** heat conductivity is selected such that a locally limited weld pool and slow cooling of the weld pool is ensured.

## Revendications

1. Procédé pour reconstituer par soudage par dépôt des aubes des compresseur (6) de forme plane destinées à des moteurs d'avion, usées ou endommagées d'une autre manière, constituées d'un matériau massif et tridimensionnelles, dans lequel la section de partie d'aube (1a à 5a) usée ou endommagée a été détachée le long d'un plan de coupe (1 à 5), et un métal en fusion est appliqué par passes successives en fonction de la forme et de la longueur à reconstituer,
**caractérisé en ce**
a) **que** l'aube de compresseur (6) est placée à l'horizontale pour l'essentiel,
b) **que** le soudage par dépôt est effectué contre le fond d'une coupelle de soudage (8) horizontal pour l'essentiel s'appuyant en épousant sa forme sur la surface de partie d'aube restante,
c) et **qu'**au moins dans la section de partie d'aube (1a à 5a) à reconstituer, la forme de la surface du fond de la coupelle de soudage (8) a exactement la forme en négatif du côté de l'aube tourné vers le fond de la coupelle de soudage (8).

2. Procédé selon la revendication n° 1, **caractérisé en ce qu'**en fonction de l'épaisseur de la partie d'aube plane, deux passes de soudure ou davantage sont appliquées l'une sur l'autre.

3. Procédé selon la revendication n° 1 ou n° 2, **caractérisé en ce que** le soudage par dépôt est effectué parallèlement au plan de coupe (1 à 5) dans le même sens ou en sens opposés.

4. Procédé selon la revendication n° 1 ou n° 2, **caractérisé en ce que** le soudage par dépôt est effectué verticalement au plan de coupe (1 à 5) dans le même sens ou en sens opposés.

5. Procédé selon une des revendications n° 1 à n° 4, **caractérisé en ce que** le soudage par dépôt sous gaz protecteur est réalisé selon la technologie du soudage au laser avec apport de poudre.

6. Procédé selon la revendication n° 5, **caractérisé en ce que** l'alimentation en métal d'apport a lieu latéralement ou selon un tracé circulaire.

7. Procédé selon une des revendications n° 1 à n° 6, **caractérisé en ce que** la taille et la forme de la section de partie d'aube à reconstituer ainsi que la géométrie de transition sont déterminées par un procédé de visualisation et que les mouvements pour l'application des passes de soudure sont calculés et pilotés par ordinateur.

8. Procédé selon une des revendications n° 1 à n° 7, **caractérisé en ce que** l'opération de soudage est réalisée sur un disque de compresseur BLISK monoétagée ou polyétagée à l'état monté.

9. Procédé selon une des revendications n° 1 à n° 8, **caractérisé en ce que** la section de partie d'aube reconstituée est soumise à un traitement de surface et à un traitement thermique.

10. Dispositif pour réaliser le procédé selon la revendication n° 1, constitué d'une partie d'aube à réparer et d'une coupelle de soudage,
**caractérisé en ce que** la coupelle de soudage (7) fixée provisoirement à une face inférieure de la partie d'aube à réparer, et amovible vers le bas après le soudage de réparation, est constituée d'un fond de coupelle de soudage (8) et de joues latérales (9), sachant que la forme de la surface du fond de la coupelle de soudage (8) représente un moulage identique à la forme de la surface d'un côté de la partie d'aube à réparer, et que le contour intérieur des joues latérales (9) correspond au contour du bord d'attaque (10) et du bord de fuite (11 ) de la partie d'aube plane à réparer.

11. Dispositif selon la revendication n° 9, **caractérisé en ce que** la coupelle de soudage (7) est constituée d'un matériau thermorésistant, dissipant la chaleur.

12. Dispositif selon la revendication n°11, **caractérisé en ce que** la conductibilité thermique est choisie de manière telle que sont garantis un bain de fusion localement limité ainsi que son lent refroidissement.
